# EUROPEAN PATENT APPLICATION

(11) **EP 1 787 854 A1**
(43) Date of publication of application: **23.05.2007**
(21) Application number: 06116428.1
(22) Date of filing: 30.06.2006
(51) Int. Cl.: B60M 1/28

(54) **Vehicle measuring railway line parameters**

(30) Priority: 18.11.2005 IT MI20052203
(71) Applicant: Balfour Beatty Rail S.P.A., 20141 Milano (IT)
(72) Inventor: Taverna, Enzo, 27058, Voghera (IT); Orgera, Augusto, 04020, Spigno Saturnia (IT); Paludi, Sandro, 66020, Sambuceto (IT); Gamba, Gianfranco, 24121, Bergamo (IT)
(74) Representative: Gervasi, Gemma

(57) **Abstract**

An apparatus mounted on a bogie 7 for the measuring of line parameters in a railway line 1 provided with poles 2 and supporting cross arms 3 of the wire 4, continuously and dynamically performs the following functions: marking the poles 2 to determine the position of the cross arms 3; measuring the displacement and axis of track 1; measuring the transversing of the contact wire 4 and the distance of the contact wire 4 from the track level PF; and measuring the position of the supporting cross arm 3 of the contact wire 4 on the relevant pole 2.

## Description

The present invention relates to an apparatus for measuring railway line parameters.

It is known that the construction of railway lines envisages various activities, among which it is possible to identify the following: installation of cross arm supporting poles; assembly of cross arms; tensioning of carrying cable; tensioning of contact wire; and installation of swinging links between carrying cable and contact wire.

It is also known that it is of primary importance for a correct operation of the pantograph, i.e. the device installed on the upper part of the locomotive with the function of taking electrical power from the service line, that the contact wire(s) are at the correct distance from the track surface (technically called "track level") and that such wire(s) are placed with an arrangement which is not parallel to the tracks but rather alternating from one side towards the other by a quantity defined in design (such arrangement is called "transversing").

A complex, entirely manual method is currently used for measuring and checking the aforesaid parameters during construction of a railway line entailing a considerable degree of imprecision and, above all, a considerable waste of time for collecting and storing data.

The need for an apparatus for measuring the aforesaid line parameters affecting aforesaid activities is therefore felt, both for preliminary railway line construction surveying and for periodical in-service inspections.

It is the object of the present invention to provide an apparatus for precisely and automatically measuring and checking railway line parameters and therefore considerably reducing measuring errors and service costs.

More precisely, the present invention relates to an apparatus which is adapted to perform the following functions:
- marking the position of the contact wire cross arm on the respective pole and with respect to the track level;
- dynamically measuring the track gauge and at the same time dynamically calculating the track axis;
- measuring the distance between the pole face and the inner profile of the rail on pole side;
- measuring the distance or span between the various poles;
- measuring the distance of the contact wire from the track level;
- measuring the transversing of the contact wire;
- measuring the relative displacement between cross arm and pole;
- measuring the temperature of the contact wire; and
- measuring the position of the swinging links.

Therefore, the present invention provides an apparatus for measuring the railway line parameters of a railway line according to claim 1.

A detailed description of a preferred embodiment of the line parameter measuring and checking apparatus according to the present invention will now be provided, by way of non-limitative example, with reference to the accompanying drawings, in which:
figure 1 schematically shows a railway line taken at a supporting pole;
figure 2 schematically shows the transversing of a contact wire of the respective railway line section with reference to the axis of a rail underneath;
figure 3 schematically shows a part of the apparatus of the present invention;
figure 4 schematically shows a part of the apparatus of the present invention in charge of measuring the track gauge and axis;
figure 5 schematically shows another part of the apparatus of the present invention for measuring the distance between pole and track;
figure 6 schematically shows another part of the apparatus of the present invention for measuring the distance between two consecutive poles;
figure 7 shows a detailed part of the apparatus in charge of measuring transversing of the contact line;
figure 8A schematically shows the constructive configuration of the apparatus of the present invention in a first operative condition; and
figure 8B schematically shows the constructive configuration of the apparatus of the present invention in a second operative condition.

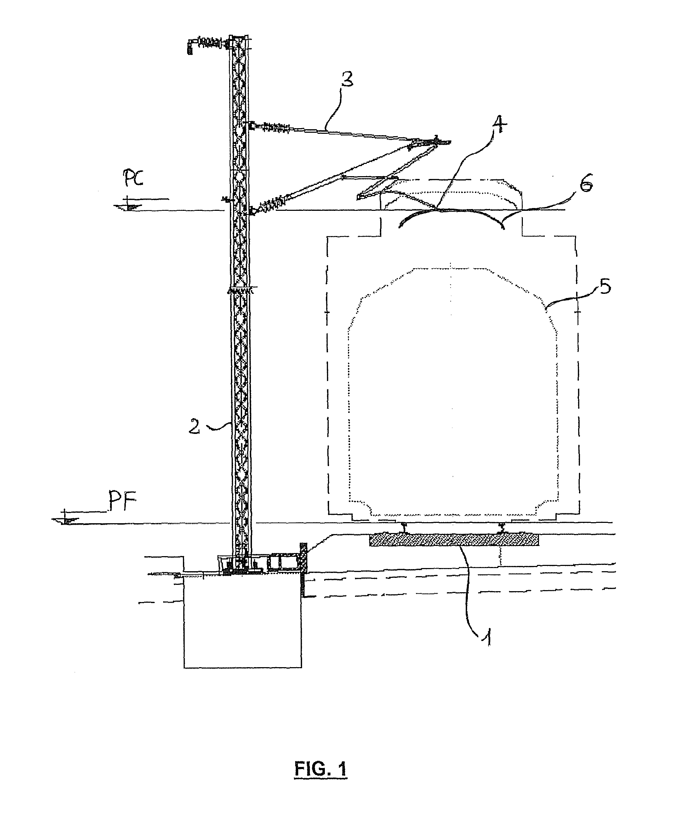

Now, with reference to figure 1, a railway line typically consists of one or more tracks 1, several supporting poles 2 each of which carries a cross arm 3 with respective terminal for supporting one or more carrying cables and one or more electrical contact wires 4.

Technically, the plane on which the contact wire 4 lays is called "contact level" PC, while the plane which contains the surface of the track 1 is called "track level" PF.

In the figure, by way of example only, the overall dimensions of a locomotive 5 equipped with a pantograph 6 are outlined with a broken line. Typically, the pantograph 6 is the device installed on the upper part of a locomotive and is used to take electrical power from the service line via electrical contact with the contact wire 4.

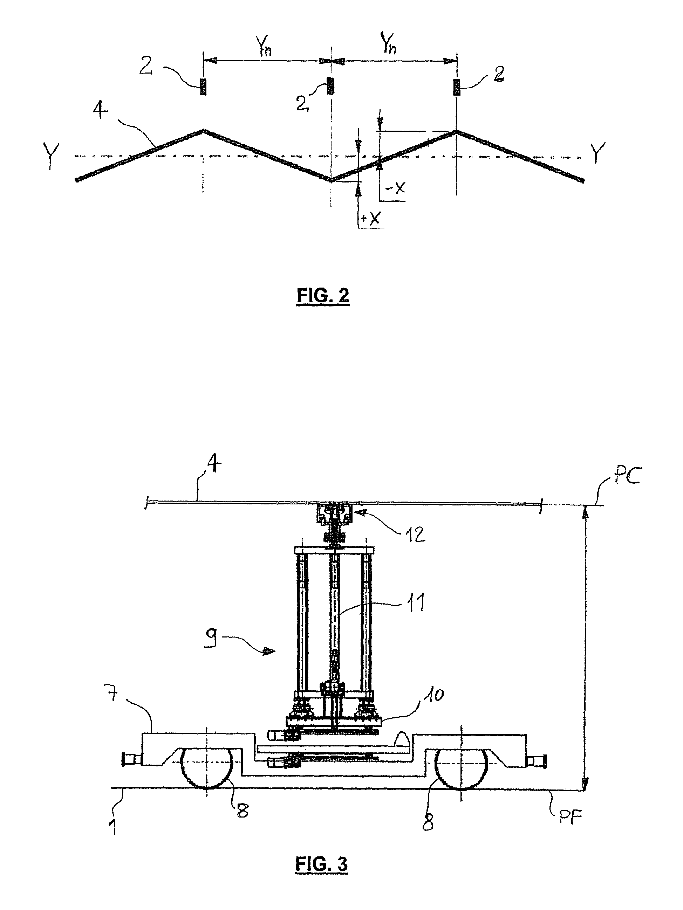

Now, with reference to figure 2, it is shown the arrangement of the contact wire 4 with respect to the track axis, i.e. the so-called "transversing" of aforesaid wire.

As apparent in the figure and for a correct operation of the pantograph 6, the contact wire 4 is arranged with respect to the longitudinal axis Y-Y of the track 1 with a zigzag configuration, indeed called "transversing". More precisely, contact wire 4 transversing is the result of the angled arrangement of the contact wire 4 with respect to the track axis Y-Y and between two poles 2, i.e. in a span Yn.

In order to obtain the transversing of the contact wire 4, the latter is fitted on the cross arms 3 of a pair of poles 2 related to a span Yn with a certain gauge X with respect to the axis Y-Y of the track 1. As a result, the contact wire 4 generally assumes an inclined arrangement by a value +X in a span Yn and a value -X in the following span Yn, and so on.

Now, with reference to figure 3, it is schematically shown a part of the apparatus of the present invention in charge of measuring the distance or height of the wire 4 from the track level PF as well as the transversing of the first with respect to the axis Y-Y of the track 1.

According to the present invention, the apparatus essentially comprises a bogie body 7 provided with a pair of axles 8, one of which may be motorised, adapted to run on the track 1 underneath. The bogie body 7 presents a series of devices, each of which in charge of measuring line parameters (not shown in the figure and illustrated in better detail below).

In order to measure the distance of the wire 4 from the track level PF, a first device 9 is envisaged comprising a first structure 10 integral with the bogie and a second vertical structure 11 slidingly mounted and pivoting on the first structure 10. The second vertical structure 11 supports a device 12 for measuring the position or transversing of the wire 4 and which simulates the push of a pantograph (described in greater detail below).

In order to measure the distance of the wire 4 from the track level PF, the device 12 is maintained in sliding contact with the wire 4, while the bogie advances on the track 1 and, at the same time, it is measured the relative vertical displacement between structure 10 and a second vertical structure 11, and between second vertical structure 11 and device 12 in contact. Furthermore, the contact between the wire 4 and the measuring device 12 is constantly ensured by a counterweight (not shown in the figure) which simulates the push of a pantograph of a train. Two or more reflectors of magnetostrictive or equivalent type are provided to measure the vertical displacements between the structures 10, the second structure 11 and the device 12. In this way, the reading of the distance of the wire 4 from the track level PF will be proportional to the signals from the magnetostrictive detectors unless a constant predetermined by the geometric dimensions of the apparatus (all described more in detail below).

Therefore, with this arrangement, the distance of the wire 4 from the track level PF can be measured on a point-by-point basis, progressively as the bogie 7 advances on the track, by measuring the excursion of the device 12 with respect to the structure 11 which is integral with the bogie 7.

The counterweight may be modified so as to "push" the "dummy pantograph" against the contact wire with variable loads of predetermined value, for example 1, 7 and 14 kilograms. Such possibility allows to measure the behaviour of the line and monitor the elastic response of the line itself.

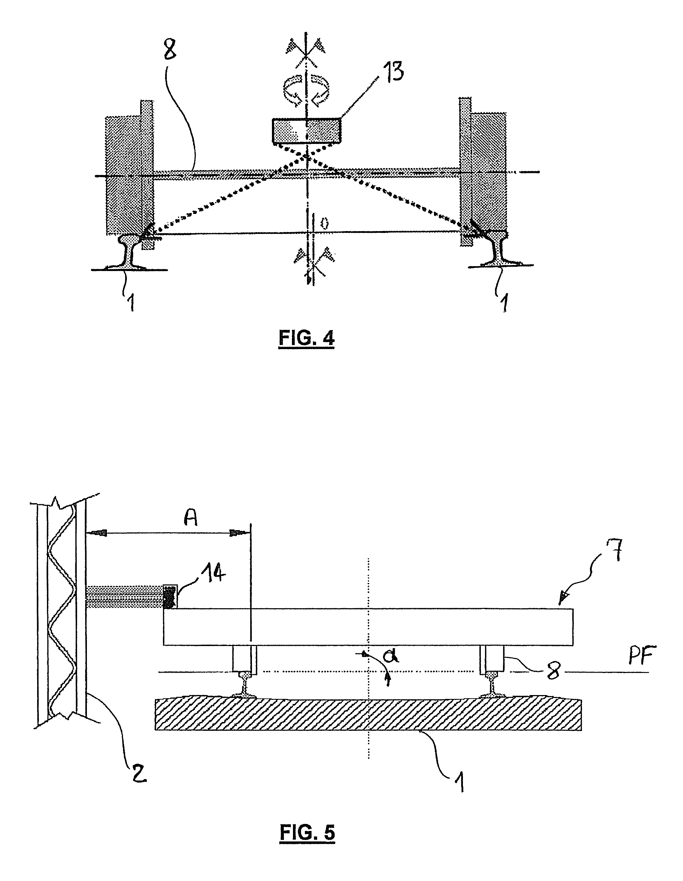

Now, with reference to figure 4, it is schematically shown a part of the apparatus in charge of measuring the gauge of the track 1 and the longitudinal axis of the latter.

The measurement is made by using a pair of laser telemetry devices 13 mounted in fixed and predetermined position on the bogie 7 (the latter not shown in the figure). The arrangement of the telemetry devices 13 is such to measure the inner profile of each rail while the bogie 7 moves on the track 1. Therefore, being known the distance between axes in assembly of the two telemetry devices 13 and their fixed distance from the track level PF, it is possible to exactly calculate in each point of measurement both the gauge of the track 1, the position of the inner profile of the rails with respect to the bogie body 7, and the position of the axis Y-Y of the track with respect to the bogie 7.

It is important to observe that the bogie 7 is mounted on normal railway suspensions but that such suspensions, at the beginning of the measurements, are made integral with the bogie by means of a bypass system which fully stiffens them and thus eliminates all elastic springing which would distort the veracity of the measurements themselves.

Furthermore, it is important to specify that the bogie 7 may sway towards either one direction or the other of the track 1 due to the shape of the axle 8 on the contact point of the rail. Consequently, knowing the relative position between bogie 7 and track 1 is essential to determine the absolute value of parameters (i.e. the gauge and the position of the axle on the track) during the telemetric devices 13 reading and considering the swaying of the bogie 7.

Figure 5 schematically shows a part of the apparatus of the present invention in charge of measuring the distance between supporting pole 2 and track 1.

More precisely, in order to measure the distance A between supporting pole 1 and rail profile relative to the side of the pole 2, a laser telemetric device 14 is fixedly mounted on the bogie 7 and capable of identifying the distance "A" of the pole 2 when the bogie 7 crosses in front of the pole. Furthermore, an inclinometer (not shown in the figure) is also mounted on the measuring system to measure the transversal angle "α" of the absolute vertical with respect to the bogie 7, and therefore to the track level PF.

Still further, after measuring the exact position of the bogie 7 with respect to the axis Y-Y of the track 1 by means of the above described telemetric device 13, the real distance A between pole 2 and profile of the rail and/or axis of the track 1 can be measured in the same point. Indeed, the trigonometric ratio between "A" and "α" allows to calculate the real perpendicular distance between the vertical plane tangent to the inner profile of the rail 1 and the vertical plane tangent to the face of the pole 2 in the point of detection of the laser 14.

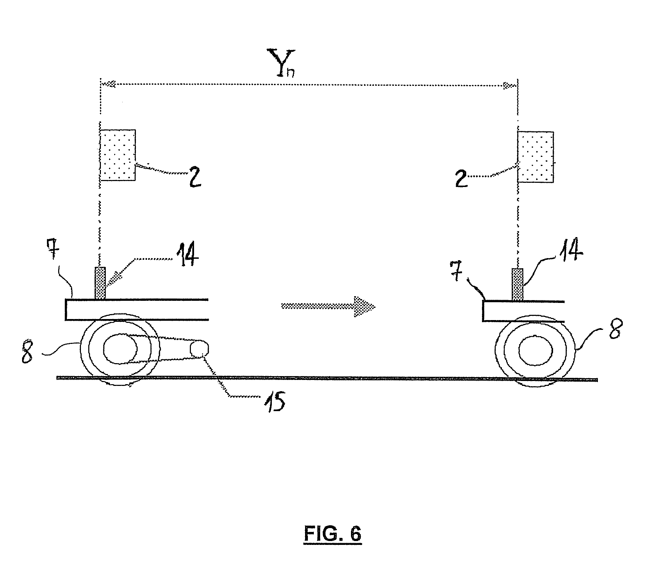

Now, with reference to figure 6, it is schematically shown a part of the apparatus in charge of measuring the distance between the single poles 2, i.e. of span Yn.

More precisely, the span Yn is measured by identifying the face of the first pole 2 by the laser signal from the measuring device 14 integral with the bogie 7, and the next signal from the same device 14 in the instant in which the next pole 2 is identified. However, it is envisaged an encoder 15 mounted on an axle 8, preferably the idle one, so as to measure the distance travelled during the interval of time between the two subsequent signals between the first pole 2 and the second pole 2.

The reading of the encoder 15 thus allows to determine the span Yn between two subsequent poles.

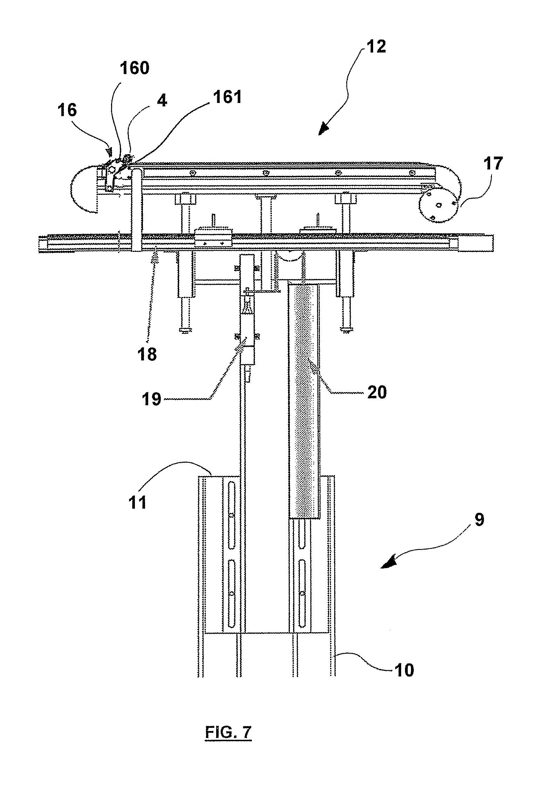

Now, with reference to figure 7, it is shown a detail of the device 12 mounted on the mobile measuring structure 11 of the position of the wire 4 with respect to the axis Y-Y of the track 1, i.e. the transversing of the power supply wire 4.

More precisely, device 12 envisages that contact with the wire 4 is maintained by a plate 16 made of high resistance material, such as for example carbide, tempered steel, sintered or the like, during the displacement of the bogie 7 underneath. The contact between the plate 16 and the wire 4 is ensured for the entire time by a clock spring 17. The horizontal displacement of the plate 16 is measured by a magnetostrictive detector 18 integral with the plate.

As easily understood from the figure, the displacement of the plate 16 coincides with the position of the wire 4 and such value is related to the position of the bogie 7 underneath with respect to the axis Y-Y of the track 1. The transversing of the wire 4 with respect to the axis Y-Y of the track 1 is thus determined.

Furthermore, a magnetostrictive detector 19 adapted to measure the excursion of the device 12 with respect to the structure 11 is provided to measure the distance of the wire 4 from the track level PF.

Still further, the contact of the device 12 with the wire 4 is again ensured by a counterweight 20 which reproduces the push of a pantograph on the wire 4 itself. Such push is adjustable according to the various needs in order to measure the real elastic behaviour of the railway line 4. For example, it can be calibrated at 1, 7 or 14 kilograms and the repetition of the measurement allows the mentioned check.

Furthermore, an optical fibre detector 160 is rigidly connected to the plate 16 and allows to detect the presence of terminals which connect the contact wire with the respective swinging links: in this way, it is possible to know the position of the swing links with respect to the single poles and, in particular, the angular position of the cross arm 3 with respect to the middle line of the respective supporting pole 2.

Still further, an infrared sensor 161 connected to a data processing unit is mounted on the plate 16 and measures the temperature of the contact wire. Such temperature measurement allows, by calculating the thermal dilatation of the contact wire section 4 and the real position of the various cross arms, to check whether the transversing is truly within the tolerance range or not. Indeed, in some cases, transversing in a certain point could be considered acceptable on absolute level but not acceptable if reconsidered with position that it would assume at the temperature referred to the basic design value.

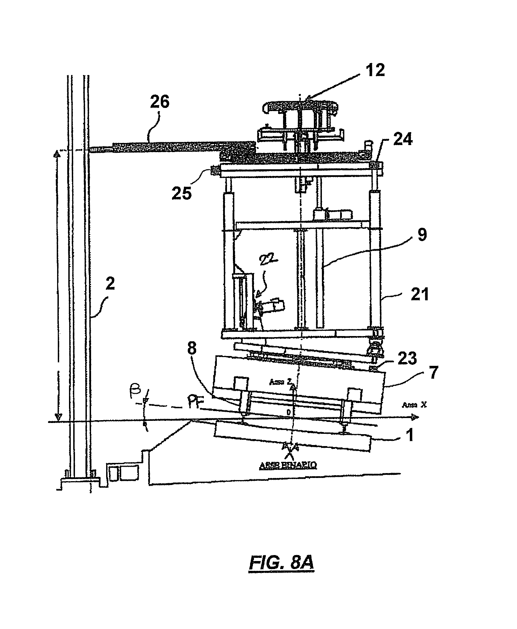

Now, with reference to figure 8A, it is shown the apparatus of the present invention in a first operating condition for marking a mounting position of the supporting cross arm 3 of the contact wire 4 on a respective supporting pole 2 with respect to the track level PF of the track 1.

However, according to the present invention, it is envisaged that some of the measuring devices hereto described are arranged within a supporting frame 21, and the frame 21 is pivotally mounted on the bogie 7. Preferably, the frame 21 is on one side hinged to the bogie 7 and on the opposite side pivotally connected to a motor and rack regulating device 22 which allows to change the inclination of the frame 21 with respect to the bogie 7 underneath. This arrangement allows to exactly measure the aforesaid line parameters also if the track 1 is inclined with respect to the horizontal direction by an angle "β", for example a bend.

Furthermore, for measuring the aforesaid values, as apparent in the figure, it is envisaged a first inclinometer 23 integrally mounted on the bogie 7 and adapted to measure the inclination of the same and therefore the inclination of the track level PF, and a second inclinometer 24 integrally mounted on the frame 21 adapted to allow the automatic vertical position of the axis of the supporting frame 21 and consequently horizontal to the axis of a further marking device 26. Indeed, the upper part of the frame 21 further presents a motorised paint or the like marking device 26 adapted to mark the pole 2 in a precise point during the crossing of the apparatus in front of the latter.

The marking must be performed after installing the poles 2 but before installing the cross arms 3: the object of the device 26 is indeed to position the cross arms 3 with respect to the track level PF.

For operation, the bogie body 7 automatically stops in front of the pole 2, the frame 21 automatically places itself in absolute vertical position, a trigonometric calculation infers the distance of the tip of the marker 26 from the face of the pole 2 and the predetermined vertical position where the marker 26 is to be positioned.

In this position, the operator enables marking, which consists in the output from a spraying head or the like for marking a line on the face of the pole 2 at a predetermined position, constant with respect to the track level PF. In such a way, the cross arms may subsequently be positioned simply by measuring the differential distance between the absolute design position and the marking position.

Furthermore, a further sensor 25 similar to the telemetric laser device 14 is mounted at the upper part of the frame 21 on the side of the pole 2. The sensor 25 is adapted to measure the distance measured at the upper part of the pole 2 and the structure 21, so as to provide the verticality or overhang of the pole 2 with respect to the absolute horizontal, along with the reading of the sensor 14.

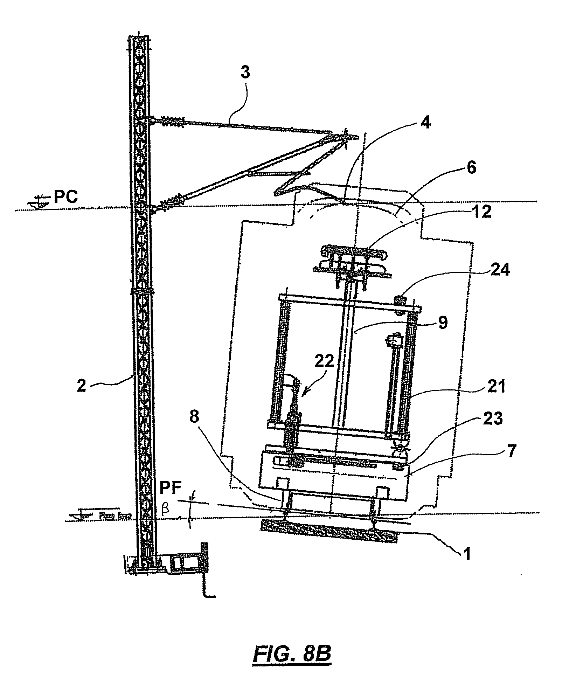

Now, with reference to figure 8B, it is shown the apparatus of the present invention in a second operative measuring condition, in which the transversing and the distance of the contact wire 4 is measured with respect to the level of the track 1, i.e. after assembly of the cross arms 3 for supporting the wire 4.

More precisely, at the beginning of the measurements, the suspensions on which the apparatus is mounted are fully stiffened so as to allow the measuring device to remain constantly perpendicular to the track level PF, also on bends with maximum transversal inclination. Such configuration makes the measurements reliable because they are not altered by any elastic springing.

This arrangement allows to exactly measure the aforesaid line parameters, also if the track 1 is inclined with respect to the horizontal direction by an angle "β", for example a bend.

It will be apparent to a person skilled in the art that the particular arrangement of the measuring devices and the bogie 7 described above according to the present invention presents innumerable advantages.

Indeed, the whole of the devices forming the apparatus of the present invention may be advantageously controlled by one or more remote units adapted to process the collected data and to operate on the devices functionally and in real time.

Advantageously, the bogie 7 may be mainly formed by five assemblies and by one or more PLC type remote units adapted to interface with the line parameter measuring devices listed above and to control and manage the five main assemblies. The five assemblies may be identified as follows:
- bogie 7;
- frame 21;
- height 9 and transversing 12 measuring assembly;
- pole-track 13 and 14 distance measuring assembly; and
- assembly 26 for marking the pole 2.

Advantageously, the bogie 7 can envisage a control and motor cab so as to be made fully autonomous during use of the same.

Still further, automated control may be envisaged via a remote frame perpendicularly unit 21 with respect to the surface based on the reading of the inclinometers 23 and 24 and acting on the control device 22.

As concerns measuring transversing the height of the wire 4 from the track level PF, according to the present invention, the exact position of the bogie 7 with respect to the track 1 can be accurately determined and thanks to the arrangement of the two laser telemetry devices 13 mounted on the bogie 7 which allow to accurately identify the position of the bogie 7 with respect to the axis of the track Y-Y. Indeed, the two laser devices 13, being mounted reciprocally counterpoised, allow to cancel the relative clearance due to displacement and/or swaying of the bogie 7 on the tracks.

As concerns marking of the pole 2, it may be entirely automated by interfacing the remote control and governing units after acquiring the data from the measuring devices 14 concerning the distance and the overhang of the pole 2.

## Claims

1. An apparatus for measuring railway line parameters, the railway comprising a track (1) and a plurality of poles (2) for supporting an electrical power wire (4), the apparatus comprising a bogie (7) provided with at least a pair of axles (8) and a control cab, and **characterised in that** it further comprises:
- means (9,10,11) for measuring the distance between wire (4) and track level (PF) of the track (1);
- means (13) for measuring track gauge (1) and exact position of the longitudinal axis thereof (Y-Y);
- means (14) for measuring the distance (A) between supporting poles (2) and track (1);
- means (14,15) for measuring the distance (Yn) between two consecutive poles (2); and
- means (12) for measuring the transversing of the wire (4) with respect to the axis (Y-Y) of the track (1).

2. An apparatus for measuring railway line parameters on a railway line according to the preceding claim, wherein said means for measuring the distance of the wire (4) from the track level (PF) of the track (1) are a device (9) which comprises:
- a first vertical structure (10) integral with the bogie (7);
- a second vertical structure (11) slidingly mounted on said first vertical structure (10);
- a device (12) for measuring the position of the wire (4) and mounted on said second vertical structure (11); and
- a magnetostrictive or equivalent device for measuring the position of said second structure (11) with respect to said first structure (10).

3. An apparatus for measuring railway line parameters on a railway line according to claim 1 or 2, wherein said means for measuring the track gauge (1) and the exact position of its longitudinal axis (Y-Y) comprise a pair of laser telemeter devices (13) or similar mounted in fixed and predetermined position of the bogie (7), the arrangement of said telemeter devices (13) being such that the position of the inner profile of each rail of said track (1) is measured during the displacement of the bogie (7) on the track (1).

4. An apparatus for measuring railway line parameters on a railway line according to claim 1 or 2 or 3, wherein said means for measuring the distance (A) between supporting pole (2) and track (1) comprise a laser telemeter device (14) or the like integrally mounted onto said bogie (7) and in an arrangement such that the presence and the distance (A) of the pole (2) at the crossing of the bogie (7) in front of the first are measured.

5. An apparatus for measuring railway line parameters on a railway line according to any of the claims from 1 to 4, wherein said means for measuring the distance (Yn) between two consecutive poles (2) comprise an encoder (15) mounted on an axle (8) of said bogie (7), the arrangement being such that said encoder (15) measures the distance travelled during the interval of time between two subsequent signals between a first pole (2) and a second pole (2), the signals coming from said device (14).

6. An apparatus for measuring railway line parameters on a railway line according to any of the preceding claims, wherein said means for measuring the transversing of the wire (4) with respect to the axis (Y-Y) of the track (1) are a device (12) mounted on said device (9) which comprises:
- a plate (16) slidingly mounted on a contact surface and made of high resistance material adapted to maintain the sliding contact with the wire (4) during the displacement of the bogie (7) underneath;
- a spring means (17) connected to said plate (16) adapted to maintain the contact between the plate (16) and the wire (4);
- a magnetostrictive or equivalent type measuring device (18) connected to said plate (16) and for the measuring of the horizontal displacement of said plate (16);
- a biasing member (20) for maintaining the sliding contact between plate (16) and the wire (4); and
- means (160) for measuring the presence of a respective terminal of said wire (4).

7. An apparatus for measuring railway line parameters on a railway line according to any of the preceding claims, further comprising a supporting frame (21) pivotally mounted on said bogie (7) and adapted to accommodate said means (9,10,11) for measuring the distance from the wire (4) to the track level (PF) of the track (1) and said means (12) for measuring the transversing of the wire (4) with respect to the axis (Y-Y) of the track (1).

8. An apparatus for measuring railway line parameters on a railway line according to the preceding claim, further comprising:
- means (22) for adjusting the inclination of said frame (21) with respect to the bogie body (7);
- means (24) for measuring the inclination of said frame (21) with respect to the bogie body (7); and
- means (23) for measuring the inclination of the bogie body (7) with respect to the vertical direction.

9. An apparatus for measuring railway line parameters on a railway line according to claim 7 or 8, further comprising a marking device which comprises a motorised arm (26) mounted on said pivoting frame (21) and adapted to mark the pole (2) in a precise point and at the crossing of the apparatus in front of the latter.

10. An apparatus for measuring railway line parameters on a railway line according to claims 7 or 8 or 9, in which said means for adjusting the inclination of said frame (21) with respect to the bogie body (7) comprises a motor and rack assembly (22).

11. An apparatus for measuring railway line parameters on a railway line according to any of the claims 7-10, wherein said means for measuring the inclination of said frame (21) with respect to the bogie body (7) comprise an inclinometer (24) integrally mounted on said frame (21).

12. An apparatus for measuring railway line parameters on a railway line according to any of the claims 7-11, wherein said means for measuring the inclination of the bogie body (7) with respect to a vertical direction comprise an inclinometer (23) integral with said bogie body (7).

13. An apparatus for measuring railway line parameters on a railway line according to any of the claims 6-12, further comprising means (161) for measuring the temperature of the contact wire (4) arranged on said device (9).

14. An apparatus for measuring railway line parameters on a railway line according to any of the preceding claims, further comprising one or more remote management and contact PLC type units interfaced with one or more devices for the measuring of line parameters according to the preceding claims.
